## Europäisches Patentamt
## European Patent Office
## Office européen des brevets

(11) Publication number: **0 161 614**
**B1**

(12) **EUROPEAN PATENT SPECIFICATION**

(45) Date of publication of patent specification: **24.10.90**

(51) Int. Cl.⁵: **G 05 D 11/035**, F 04 B 13/02, C 02 F 1/68

(21) Application number: **85105513.7**

(22) Date of filing: **06.05.85**

(54) Apparatus for injecting measured quantities of liquid into a fluid stream.

(30) Priority: **16.05.84 US 610755**
**17.01.85 US 692668**

(43) Date of publication of application:
**21.11.85 Bulletin 85/47**

(45) Publication of the grant of the patent:
**24.10.90 Bulletin 90/43**

(84) Designated Contracting States:
**AT BE CH DE FR GB IT LI LU NL SE**

(56) References cited:
**GB-A-2 068 475**
**US-A-1 506 834**
**US-A-2 750 930**
**US-A-3 405 606**
**US-A-3 692 274**
**US-A-3 901 313**
**US-A-3 937 241**
**US-A-4 060 351**
**US-E- 29 193**

(73) Proprietor: **Walton, Frank A.**
**896 North Mill Street**
**Lewisville, Texas 75067 (US)**

(72) Inventor: **Walton, Frank A.**
**4706 Ridgeside Drive**
**Dallas Texas 75243 (US)**
Inventor: **Perrinet, Paul M.**
**Domaine De Magret Avenue Kennedy**
**F-3370 Merignac (FR)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

EP 0 161 614 B1

**Description**

The present invention pertains to an apparatus for injecting a predetermined quantity of fluid additive into a primary fluid stream as outlined in the preamble of the main claim.

An apparatus of this type is disclosed in US—A—3 937 241. The apparatus is adapted to be interposed in a conduit and powered by the primary fluid flowing through the conduit for operating an additive injection pump to inject relatively minute quantities of additives in predetermined volumetric ratios to the flow of the primary fluid. Applications of such apparatusses are adding medications to drinking water for livestock, treating water with additives such as chlorine or iodine and adding fertilizer concentrate to irrigation water, for example. The known apparatus shows a shaft for moving the valves between their positions which is eccentrically arranged with respect to the piston assembly and to the additive fluid piston. The means engageable with the housing for initial movement of the shaft comprises another shaft which is also arranged eccentrically with the axis of the piston assembly and the additive fluid piston. In the known apparatus forces which initiate movement of the valve means are not directed substantially along the central axis. One of the shafts actuates one end of a toggle fork which is snapped over center by a pair of springs to operate the other shaft depending upon the position of the first shaft. The other end of the fork pivots in a notch fixedly positioned in the snapped piston by a support member. It has been determined that such an eccentrical arrangement of the shafts as well as the toggle means designed as a fork connecting the two eccentrical shafts will provide for eccentrically applied forces. Eccentrically applied forces may cause skewing of the respective pistons within their bores which may cause a non-determined change in the cycle time of the stroke of the piston assembly, resulting in a change of the ratio of the quantities of primary fluid and additive being mixed with each other.

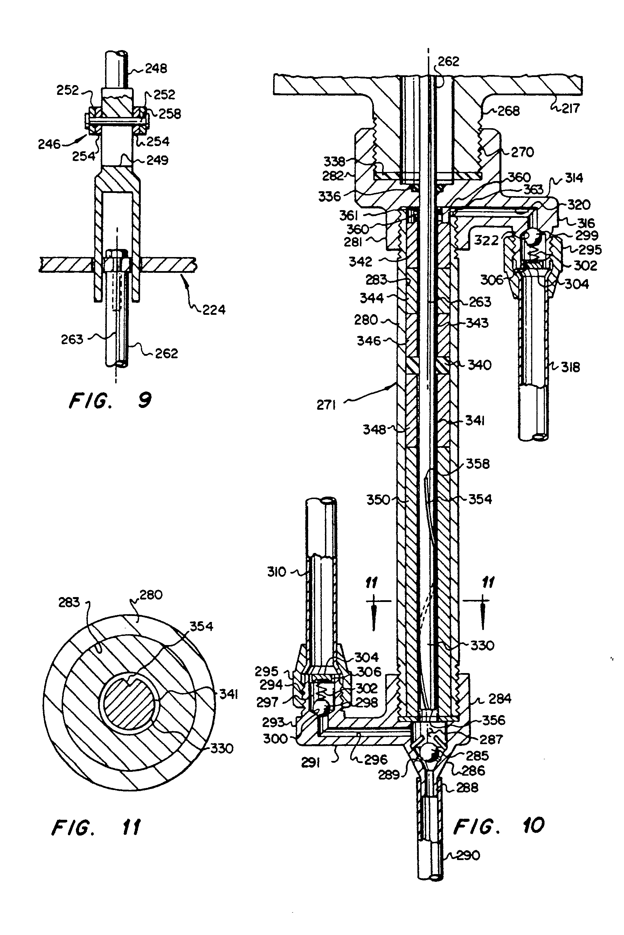

Re-issued US—A—29 193 discloses an injection pump which, however, doe not use a differential piston assembly. Only two chambers for the first fluid stream are provided, whereas only a single, centrally located valve connects the first and the second chamber. The known two chamber injection pump, however, requires the outlet being subjected to a constant outlet pressure. When the outlet pressure changes, different amounts of primary fluid will leave the outlet during the filling of the second chamber while the amount of additive remains equal for each pump stroke. Gravity forces for initiating the downward movement of the piston requires a strict vertical arrangement of the injection pump. By using the coil spring according to the embodiments of Figs. 10 and 11, the necessary force for upward movement of the piston increases progressively.

Form US—A—3 692 274 and US—A—2 750 930 pumps are known which are driven by pilot valve controlled double acting motors. The valve stem of one of the necessary valves is arranged coaxially with the piston arrangement of the pump, and one toggle means is used to accelerate valve motion. The known appratusses, however, are not to be used as injection pumps for injecting a predetermined amount or fluid additive into a primary fluid, in which this primary fluid is used to drive the additive pump.

US—A—4 060 351 disclose an injection pump for injecting quantities of a secondary fluid into a container containing primary fluid. The pump contains a cylinder, a piston like arrangement of a pin and a tubular member, and a piston rod, while the piston rod and the piston arrangement being movable relative to each other during a part of their way. The discharge passage includes a one-way valve. The quantity of the secondary fluid injected during each stroke may not be defined independently from the stroke, neither by means of a bypass chamber nor by spacer means inserted into the bore.

It is therefore an object of the present invention to provide an apparatus for injecting a predetermined quantity of fluid additive into a primary fluid stream adapted to avoid skewing of the piston assembly and allowing even small quantities of the additive fluid to be injected precisely.

The apparatus as claimed in claim 1 provides for the appliance of the forces within the apparatus essentially coaxial with respect to each other, and will prevent skewing of the pistons.

The sub-claims disclose suitable developments of the invention, while it should especially be noted that the embodiment of claim 7 separates the discharge chamber essentially from any connection to the primary fluid stream, and provides a bypass means allowing a portion of the additive fluid which should not be injected into the primary fluid stream, to be bypassed. Claim 13 discloses means for reducing the amount or additive injected during a stroke of the pump to a desired small quantity which may be varied if desired. Claim 14 also allows the injection of corrosive additive fluids without any danger of negatively influencing the function of the inventive apparatus. The injecting apparatusses of prior art, to the contrary, are adapted to inject the additive upstream the apparatus, that is into the first chamber.

Brief description of the drawing

Figure 1 is a longitudinal central section view of the additive injection pump apparatus of the present invention;

Figure 2 is a detal section view taken along the line 2—2 of Figure 1;

Figure 3 is a detail section view taken along the line 3—3 of Figure 1;

Figure 4 is a detail section view taken along the line 4—4 of Figure 1;

Figure 5 is a section view taken along the line 5—5 of Figure 1;

Figure 6 is a section view taken along the line 6—6 of Figure 1;

Figure 7 is a detail section view taken along line 7—7 of Figure 4;

Figure 8 is a longitudinal central section view of another embodiment of the additive injection pump apparatus;

Figure 9 is a detail section view taken along the line 9—9 of Figure 8;

Figure 10 is a central longitudinal section view of the additive injection pump of Figure 8 on a larger scale;

Figure 11 is a detail section view taken along the line 11—11 of Figure 9; and

Figure 12 is a detail section view taken along line 12—12 of Figure 8.

Description of the preferred embodiments

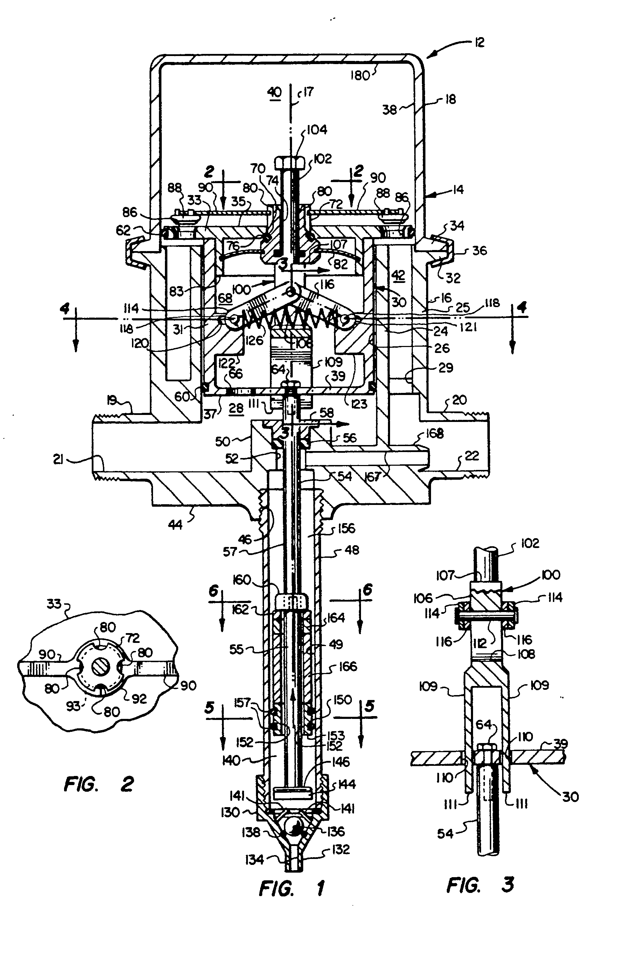

Referring to Figure 1, a liquid additive injection pump apparatus is generally designated by the numeral 12 and comprises a housing 14 having a lower section 16 and an upper section 18. The housing section 16 includes opposed bosses 19 and 20 providing respective fluid inlet and discharge passages 21 and 22. The bosses 19 and 20 are adapted to be connected to a conduit, not shown, for conducting a primary liquid flow stream, such as water, into which a fluid additive is to be injected to flow with the liquid leaving the passage 22.

The housing 16 includes an interior cylindrical wall part 24 delimited by a cylindrical bore 26 forming a first expansible chamber 28 for a reciprocable piston assembly 30. The housing 18 is releasably clamped to the housing 16 across cooperating circumferential flanges 32 and 34, respectively, which are secured together with a band clamp 36. The housing 18 includes a bore 38 which is cooperable with the piston assembly 30 to form a second expansible chamber 40. The housing section 16 further includes a third expansible fluid discharge chamber 42 which is defined in part between the wall part 24 and an outer cylindrical sidewall 25. The chamber 42 is in communication with the fluid discharge passage 22 and the chamber 28 is in communication with the fluid inlet passage 21. The housing section 16 further includes a bottom wall portion 44 integrally formed with the sidewall 25 and having a threaded bore 46 coaxial with the bore 26 for engagement with one end of an additive injection pump cylinder 48. The housing part 16 still further includes an interior cylindrical boss 50 having a stepped bore 52 formed therein. A pump piston rod 54 projects through bore 52 and is in slidable sealing engagement with a conventional piston rod seal 56. The rod seal 56 is suitably retained in the bore 52 by a removable plug member 58.

The piston assembly 30 includes a first piston part 31 which is reciprocably disposed in the bore 26 and is in sealing engagement therewith by a piston ring seal 60. The piston assembly 30 includes a second piston part 33 of larger diameter than the piston part 31 and suitably secured thereto and slidably disposed in the chamber 40. The piston part 33 is in slidable sealing engagement with the bore 38 by a piston ring seal 62. The axially projected area of piston face 35 with respect to a longitudinal central axis 17 and exposed to the chamber 40 is greater than the opposed axially projected area of piston face 37 which is exposed to chamber 28. The differential areas between the effective piston faces 35 and 37 are important to the functioning of the motor utilizing the piston assembly 30. A bottom wall 39 of the piston part 31 is suitably secured to the upper end of piston rod 54 by a threaded fastener 64. The bottom wall 39 includes an opening 66 therein which communicates the chamber 28 with an interior chamber portion 68 of the first chamber 28 formed within the piston assembly 30. The piston part 33 includes a central bore 70 which is cooperable with a movable valve closure member 72 to place the chambers 28 and 40 in communication with each other and to effectively block the flow of fluid between the chambers 28 and 40.

Referring to Figures 1 and 2, the closure member 72 comprises a generally cylindrical plug having a central longitudinal bore 74 formed therein and having a resilient seating member 76 engageable with the piston part 33 to block communication between the chambers 28 and 40 through the bore 70. However, the closure member 72 is movable in a generally downward direction, viewing Figure 1, to place the chambers 28 and 40 in communication with each other through grooves 80, see Figure 2 also. The closure member 72 is adapted to be biased in the position shown or in an open position by a leaf spring 82 which is secured to the closure member 72 and is engaged with an axially projecting flange portion 83 of the piston part 33.

The piston part 33 further includes at least two fluid discharge valve passages 86 formed near the outer periphery of the part 33 and in communication with the chamber 42. Poppet type valve closure members 88 are disposed for closing the passages 86 and are supported on opposed radially projecting arms 90 of a support member 92 which is suitably secured on the closure member 72 in a peripheral groove 93. Figure 2. Accordingly, when the closure member 72 moves to a position to place the chambers 28 and 40 in communication with each other the valve closure members 88 move to block flow of fluid between the chambers 40 and 42. The support arms 90 are somewhat resiliently deflectable to provide for suitable seating of the closure members 88 against the piston part 33 to close the passages 86.

Referring now to Figures 1, 3 and 4, the valve members 72 and 88 are assisted in their movement between respective open and closed positions by a mechanism comprising shaft 100 having a portion 102 slidably disposed in the bore 78 and having a transverse collar portion 104 formed on its upper distal end, Figure 1. The shaft 100 includes an enlarged diameter portion 106 forming a transverse shoulder 107 with the portion 102 and having an elongated slot 108 formed therein. The lower end of the shaft 100 includes a yoke formed by arms 109 which project through slots 110 formed in the piston bottom wall 39 on opposite sides of the upper end of piston rod 54.

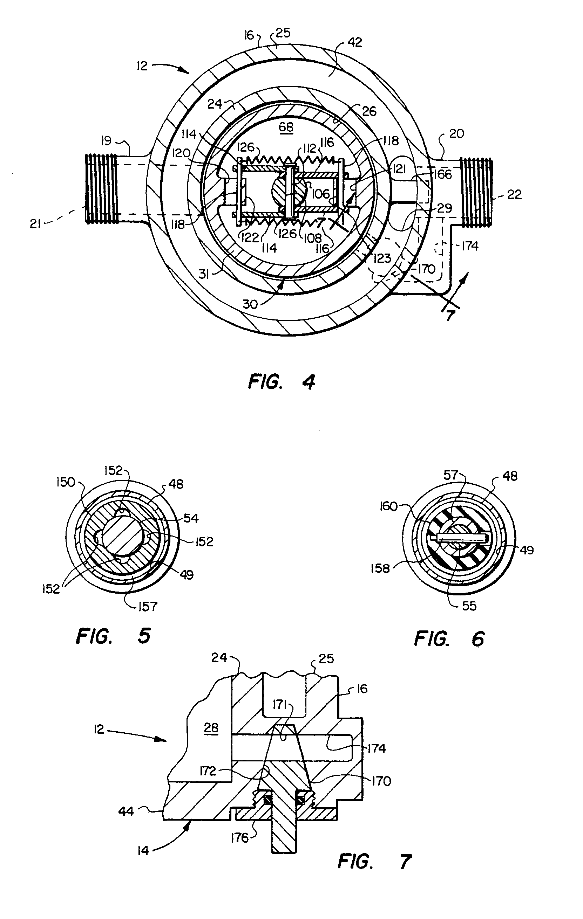

The shaft 100 is biased in opposed limit positions by a mechanism including a lost motion coupling formed by a pin 112, Figures 3 and 4, disposed in the slot 108 and secured at its opposite ends to opposed links 114 and 116, respectively. The links 114 and 116 are retained on the pin 112 and are pivotal relative to the pin 112. The opposite ends of the links 114 are connected to a pin 118 disposed in an elongated slot 120 formed in a boss 122 on the piston part 31. In like manner, the links 116 are suitably secured to a second pin 118 disposed in an elongated slot 121 formed in a boss 123 opposite the boss 120. The pins 118 are secured to a pair of extension coil springs 126 which yieldably bias the pins toward each other to their limit position in the slots 120 and 121. However, in response to movement of the piston assembly 30 in an upward direction, viewing Figure 1, the links 114 and 116 are operable to extend the pins 118 in thz slots 120 and 121 through the centered position of the links to snap the closure member 72 in an open position and the closure members 88 into a closed position. In response to downward movement of the piston assembly 30 the distal ends 111 of the arms 109 are engageable with the boss 50 to move the links 114 and 116 through a centered position to snap the closure member 72 in a closed position and the closure members 88 into an open position, as illustrated in Figure 1.

The liquid injection pump cylinder 48 is closed at its lower end by a removable cap 130 which includes a fitting 132 forming a liquid additive inlet passage 134. The cap 130 is threaded to the lower end of the cylinder 48 and also is provided with a ball type check valve 136 engageable with a seat 138 to prevent flow of fluid out of an interior chamber 140 through the passage 134. The check valve 136 is suitably retained for limited movement away from seat 138 by opposed retainer fingers 141. The piston rod 54 extends substantially through the chamber 140, in the position of the piston assembly 30 illustrated in Figure 1, and includes a lower transverse flange 144 supporting a circumferential seal member 146.

Referring to Figures 1 and 5, in particular, the pump cylinder 48 includes a longitudinal bore 49 defining, in part, the chamber 140 and slidably supporting an additive injection pump piston 150. The piston 150 is slidably journalled on the rod 54 and includes a plurality of longitudinal passages 152 formed therein and communicating the chamber 140 with a chamber portion 156 formed in the cylinder 48 between the piston 150 and the seal 56. A lower transverse end face 153 of piston 150 is engageable with the seal ring 146, however, to close off communication of fluid between the chambers 140 and 156 through the passages 152. The piston 150 is supported in the bore 49 by piston ring seals 157 disposed in circumferential grooves formed in the piston 150.

Referring to Figures 1 and 6, piston rod 54 includes a separable rod section 55 which is secured to an upper rod section 57 by a transversely extending retaining pin 158, Figure 6, which extends through cooperating transverse bores formed in the rod sections 55 and 57, respectively, to join the rod sections together. The pin 158 is retained in the position shown in Figure 6 by a resilient retaining collar 160 which is removable to permit extraction of the pin 158. The collar 160 also forms a retainer for a plurality of pump displacement control washers 162, 164 and 166 retained on the rod 54 between the collar 160 and the piston 150. The washers 162, 164 and 166 are preselected in accordance with the predetermined quantity of liquid to be injected per stroke of the additive injection apparatus and placed over the rod section 55 for retention between the piston 150 and the collar 160. The washers 162, 164 and 166 are of smaller diameter than the bore 49 and are loosely retained on the piston rod 54 to permit free flow of additive fluid therearound.

A fluid additive substance may be injected into the primary fluid flowing through the apparatus 12 by injection of the additive fluid into the passage 22 downstream of the motor formed, in part, by the piston assembly 30 so that the additive will not be exposed to the piston assembly, its seals, the valves 72 and 88 or the valve actuating mechanism described hereinabove. In this regard, the housing section 16 is provided with a passage 167 formed by a conduit 168 extending from communication with the chamber 156 into the passage 22 whereby displacement of fluid from the chamber 156 by the piston 150 results in injection of fluid into the passage 22 to mix with the primary fluid after it has passed substantially through the apparatus 12.

Referring briefly to Figures 4 and 7, the apparatus 12 also includes a bypass valve for bypassing the primary fluid which would normally flow through the apparatus 12 directly from the chamber 28 to the passage 22 without actuating the motor piston assembly 30. A tapered plug valve closure member 170 is supported in a tapered valve bore 172 formed in the housing 16 and interposed in a passage 174 which extends between the chamber 28 and the passage 22 as indicated in Figures 4 and 7. The closure plug 170 is suitably retained in the bore 172 by a removable retaining nut 176. In response to rotation of the closure plug 170 to the position shown in Figure 7 primary fluid may flow directly from chamber 28 through passage 174 and a suitable passage 171 formed in the closure plug directly to the passage 22. The plug 170 may be rotated approximately 90° from the position shown in Figure 7 to block the flow of fluid from chamber 28 directly to passage 22 by way of passage 174.

The operation of the apparatus 12 will now be described in conjunction with Figure 1. In the position of the piston assembly 30 and the piston 150 illustrated in Figure 1, it will be assumed that primary fluid under pressure is present in chambers 28 and 68 from a source, not shown, by way of passage 21 and that the bypass valve closure member is closed to block the passage 174. It will further be assumed that primary fluid at a reduced pressure is present in chambers 40, 42 and passage 22 and, since the valves 88 are in an open position the pressure is the same in these respective chambers. It will also be assumed that the passage 134 is in communicwhion with a source of fluid additive, not shown, and that a quantity of additive has been drawn into chamber 140 as the result of a previous operating cycle of the piston 150 and the piston rod 54. Due to the higher pressure of fluid in the chambers 28 and 68 than the fluid pressure in chambers 40 and 42 the piston assembly 30 is being urged to move upwardly due to a pressure fluid force acting across the effective area defined by the piston face 37.

As the piston assembly 30 moves upward from the position shown the flange 144 moves to sealingly engage the piston 150 with the seal 146. As soon as the seal 146 engages the piston 150 additive fluid trapped in chamber 156 is forced through passage 164 into passage 22 during further upward movement of the piston 150. At the same time check valve 136 opens to admit a fresh charge of additive fluid to the chamber 140 below the piston 150. As the piston assembly 30 moves upward, the collar 104 becomes engaged with the transverse housing wall 180 and the pins 118 move in their respective slots 120 and 121 toward a centered position of the respective links 114 and 116. Since the volume of the chamber 42 does not increase at the same rate as decrease in the volume of chamber 40 some displacement of primary fluid occurs from chamber 42 through passage 29 and passage 22 to mix with the additive being injected into passage 22 during the upward stroke movement of the piston assembly 30 and the piston 150.

As the piston assembly 30 moves further upward, the links 114 and 116 move over center and the springs 126 urge the pins 118 toward each other to cause the pin 112 to translate rapidly to the bottom end of slot 108 impacting the shaft 100 and snapping the valve closure member 72 into the open position. The biasing spring 82 also passes through an overcenter position and assists in urging the closure member 72 open against the urging of pressure fluid acting thereon in chamber 68. Movement of the closure member 72 to the open position also effectively closes the passages 86 by the seating of the valves 88 against the piston part 33.

With the valve member 72 in an open position pressure fluid at the higher pressure in chambers 28 and 68 is communicated through the passages 80 to the chamber 40 to act on the piston face 35. Since the axial projected face area of the piston face 35 is greater than the opposing effective face area 37, the piston assembly 30 is now urged to move downwardly, as fluid flows into the chamber 40. Movement of the piston assembly 30 in the downward direction displaces fluid from the chamber 42 through the passage 22 to further mix with the charge of liquid additive which was injected into the passage during the upstroke of the piston assembly.

As the piston assembly 30 moves downward the valve closure member 72 remains in the open position and the links 114 and 116 and pin 112 remain in the position into which they were displaced during upward movement. The piston 150 and the washers 162, 164 and 166 also remain stationary in the upward position described, even though the piston rod 54 is moving downward, due to frictional engagement of the piston ring seals 157 with the bore wall 149, until the collar 160 engages the assembly of the washers 162, 164 and 166 and the piston 150. Further downward movement of the rod 54 will displace the piston 150 and washers 162, 164 and 166 with the rod 54. During downwward movement of the piston rod 54 the check valve 136 is normally in a closed position.

As the piston assembly 30 and the rod 54 move back to the starting position, fluid in the chamber 140 flows around the flange 144 and through the passages 152 in the piston 150 to maintain the chamber 156 full of liquid additive. The distal ends 111 of the shaft arms 109 become engaged with the top of the boss 50 to move the shaft 100 upward relative to the piston assembly 30 until the links 114 and 116 move to and through the center position whereupon the springs 126 snap the pin 112 to the upper end of slot 108 impacting the shaft 100 and moving it upwardly engaging the shoulder 107 with the valve closure member 72 and forcibly displacing the valve closure member back to the position illustrated in Figure 1. The closure member 72 is assisted in its movement and biased into the closed position by the spring 82. As soon as the valve 72 closes and the valve members 88 open, the piston assembly 30 commences an upstroke described previously; however, displacement of a predetermined quantity of additives does not occur until the seal 146 engages the bottom face 153 of piston 150 to close off communication between chambers 140 and 156.

The amount of fluid additive injected per stroke cycle of the piston assembly 30 is preselected by the overall height of the washer stack comprising the washers 162, 164 and 166. Additional washers may be interposed between the piston 150 and the collar 160 or, one or more of the washers shown may be removed from the piston rod 54. The fewer number of washers or the smaller the thickness of the washer stack between the piston 150 and the collar 160 the smaller will be the quantity of liquid injected during a stroke cycle of the piston 150 since, upward displacement of the piston 150 by the rod 54 does not occur until the seal 146 engages the face 153. The number of washers retained on the piston rod 54 may be conveniently changed by unthreading the cylinder 48 at its connection with the housing 16, removing the collar 160 and the pin 158 to separate the rod section 55 from the rod section 57 whereby washers may be added to or removed from the rod section 55 at will. The rod section 55 is then reassembled with the rod section 57 and the cylinder 48 replaced.

The arrangement of the piston assembly 30, piston rod 54 and liquid additive pump piston 150 is such that all working forces acting on these parts of the apparatus 12 are directed generally along the central axis 17 and there is no tendency to cock of skew the piston assembly 30, the rod 54 or the piston 150.

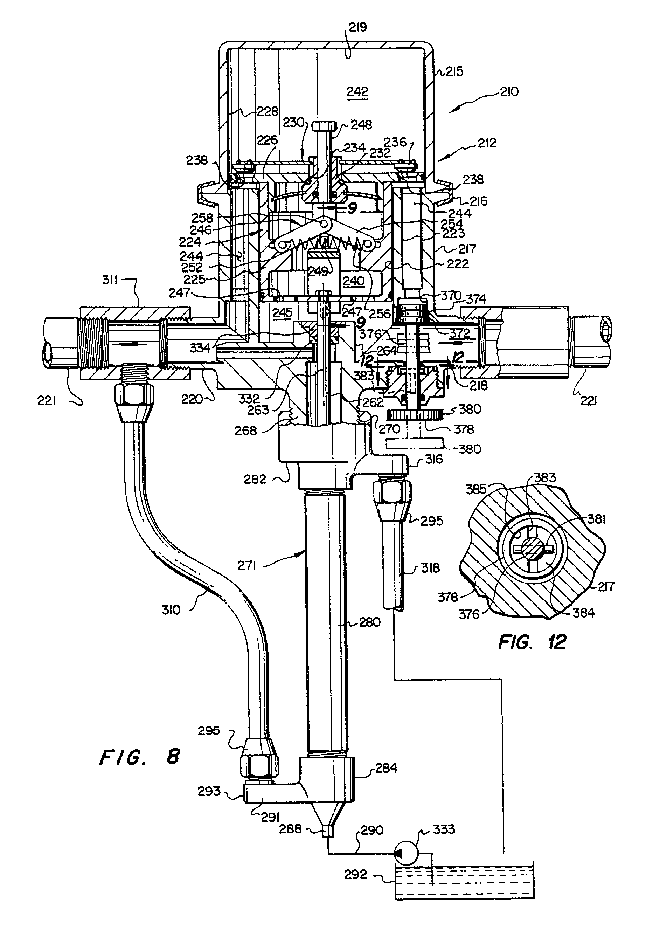

Referring now to Figures 8 and 9, another embodiment of an additive injection apparatus 210 is adapted to utilize a linearly reciprocable hydraulic motor 212 similar to the motor for the apparatus 12. The motor 212 comprises a housing 214 which may be formed in upper and lower sections 215 and 217 joined together by a suitable band type fastener 216. The housing section 217 includes respective primary fluid inlet and discharge passages formed in conduit portions 218 and 220 for interposing the motor 212 in a fluid conduit such as a domestic water supply line or the like 221. The housing section 217 includes an interior cylindrical wall 223 forming a cylinder bore 222 in which a piston assembly 224 is reciprocably disposed. The piston assembly 224 includes a first piston part 225 slidably disposed in the bore 222 and a second piston part 226 slidably disposed in a bore portion 228 formed in housing section 215.

The piston assembly 224 includes a valve assembly 230 including a first valve 232 operable to form a closure for a bore 234 and connected to a second valve 236 operable to close over respective ports 238 in the piston part 226. The valve assembly 230 is operable to effect admission of pressure fluid from a chamber 240 within the piston assembly 224 into a chamber 242 and from the chamber 242 into an annular passage 244 leading to the discharge conduit 220. The chamber 240 is in communication with the inlet conduit 218 by way of a chamber portion 245 and openings 247 in the piston section 225.

Pressure liquid in the chamber 240 acting on the effective cross sectional area of the piston section 225 is operable to move the piston assembly 224 on an upstroke, viewing Figure 8, until an actuating mechanism 246 including a rod 248 engages the wall 219 of the housing section 215 to effect opening of the valve 232 and closure of the valve means 236. When valve 232 opens pressure liquid is admitted to the chamber 242 to act on the larger effective cross sectional area of the piston section 226 to reciprocate the piston assembly in the opposite direction. The mechanism 246 includes and overcenter biasing linkage comprising opposed links 252 and 254 and a coil spring 256. The rod 248 includes a slot 249, see Figure 9 also, in which a pin 258 is disposed for limited reciprocation to snap the rod 248 into an upper limit position closing the valve 232 and a downward limit position opening the valve 232 and closing the valve means 236 in response to the reciprocation of the piston assembly 224. The aforedescribed valve bearing and actuating linkage is virtually identical to the linkage described in conjunction with the embodiment shown in drawing Figures 1 through 7.

The piston assembly 224 is connected to an elongated pump piston rod 262 which extends through an interior boss 264 formed in the housing section 217 and through an exterior boss 268 which is provided with external threads 270 for receiving the upper end of an additive injection pump 271. The motor 212 is operable to reciprocate the piston rod 262 utilizing pressure of the primary fluid flowing through the conduit 221 in which the apparatus 210 is disposed and into which additive fluid such as chlorine or iodine solutions may be injected in minute quantities at a point downstream of the motor 212 in the direction of flow of the primary fluid. Since a measured quantity of fluid is displaced through the motor 212 with each stroke of the piston assembly 224 a direct relationship between displacement of the piston rod 262 and the effective displacement of the additive pump 271 is obtained for each stroke cycle of the motor 212. The line of action of resultant forces acting on the piston assembly 224 is also coincident with the central axis of the piston rod 262, and the liquid additive injected into the flowstream may be injected at a point downstream of the motor 212 itself to thereby prevent exposure of the motor working parts to the mixture of the primary fluid and the liquid additive.

Referring now primarily to Figure 10, the additive injection pump 271 includes a cylinder tube or housing 280 threadedly coupled at its upper end to a boss 281 formed on an upper head member 282. The head member 282 is threadedly secured to the motor 212 at the boss 268. The additive fluid pump 271 further includes a lower head member 284 which is threadedly coupled to the opposite end of the cylinder tube 280 and includes a boss 286 forming an inlet conduit portion 288. The boss 286 is connected to a conduit 290, Figure 8, in communication with a source of additive liquid such as a tank or reservoir 292. Referring again to Figure 10, a ball type inlet check valve 285 is disposed in an inlet chamber 287 and is operable to engage a seat 289 secured in the boss 286. The lower head member 284 also includes a branch 291 forming a boss 293 provided with external threads 294 for receiving a coupler nut 295. An internal flow passage 296 is formed in the head member 284 in communication with the chamber 287 and opening into a chamber 297 in which a ball type discharge check valve member 298 is disposed and adapted to engage a valve seat 300. The valve member 298 is biased into the valve closed position by a spring 302 which is retained in the head member 284 by a removable insert 304. The insert 304 has suitable passage means 306 formed therein for allowing fluid to pass through the valve chamber 297 into an additive discharge conduit 310 connected to the head member 284 by the nut 295.

The upper head member 282 also includes a laterally extending branch 314 and an externally threaded boss 316 adapted to receive a nut 295 for connecting an additive fluid bypass conduit 318 to the head member 282 whereby additive fluid may be bypassed by the pump 271 back to the reservoir 292. A bypass check valve 299 is also disposed in a passage 320 formed in the head member 282 and is retained in a closed position bearing against a seat 322 by a spring 302 retained by an insert 304. The passage 320 is in communication with the bore 282 by way of a connecting passage.

The pump 271 includes a reciprocating piston 330 comprising an integral extension of the rod 262. As illustrated in Figure 8, the rod 262 extends through a seal 332 in the boss 64 held by a seal retainer cover 334. Referring to Figure 10, a second seal 336 is suitably disposed in the head member 282 and is in sealing engagement with the rod 262 adjacent the point at which it enters the bore 283. A gasket member 338 may be interposed between the boss 268 and the head member 282. The diameter of the rod 262 is preferably constant throughout its length. The piston portion 330 extends through a third seal member 340 which may be interposed in the cylinder bore 283 by an arrangement of annular ringlike spacers 342, 344, 346, 348 and 350. The number of spacers 342 through 350 is exemplary and more or fewer spacers may be utilized.

The piston 330 includes an axially extending spiral groove 354 formed on the periphery thereof, see Figure 11 also, extending from a distal end 356 to an end 358 of the groove as indicated in Figure 10. The groove 354 is formed in a spiral or helical fashion so that when the piston 330 reciprocates within the bore 283 and a portion of the groove 354 passes through the seal member 340 uniform wear is obtained around the periphery of the seal member to avoid cutting a groove in the seal. The spacers 342 through 350 are sufficiently larger in diameter than the piston 330 to form the respective chambers 341 and 343. The chamber 343 is in communication with the passage 320 by way of a plurality of laterally extending apertures 360, an annular groove 361 formed in the spacer member 342 and a groove 363 in the sidewall of cylinder tube 280.

The piston 330 is operable to reciprocate within the bore 283 in such a way that the end or control edge 358 of the groove 354 serves as a volumetric displacement control or cutoff point during a downstroke of the piston 330. When the groove end 350 moves from the chamber 343 through the seal member 340 into the chamber 341 communication between the chambers 343 and 341 is interrupted and further displacement of the piston 330 into the chamber 341 will result in reduction in the volume of chamber 341. This action will effect displacement of fluid through pasage 296 opening the discharge check valve 298 and displacement of a predetermined quantity of fluid into the conduit 310 and into the primary fluid conduit 221 at a fitting 311 downstream of the motor 212.

When the motor 212 moves the piston 330 in the opposite direction the chamber 341 will fill with fluid from the conduit 290 as the volume of the chamber increases and, as the groove control edge 358 moves through the seal member 340 and into chamber 343 additive fluid may also flow into chamber 343 through the groove 354, particularly, if a low pressure charge pump, such as the charge pump 333, Figure 8, is interposed in the conduit 290 between the reservoir 292 and the chamber 341. The charge pump 333 is suitably set to charge the chamber 341 with fluid but does not provide enough fluid pressure to unseat the discharge check valve 298 leading to conduit 310. However, the apparatus 210 may operate without a charge pump and rely on increasing displacement of the chamber 341 during an upstroke of the piston 330 to completely fill the chamber. The relatively long stroke of piston 330 and the small size of groove 354 will effectively draw fluid into the chamber 341 even in the absence of a charge pump 333. Moreover, the resisitance to opening of valve member 298 will assure that effective displacement of the pump 271 occurs only upon the control edge 358 passing downward into the seal 340.

When the piston 330 reaches the limit of its upstroke and commences a downstroke movement the check valve ball 285 closes against the seat 289 and, as the piston 330 moves downward, additive is displaced from the chamber 341 into the chamber 343 through the groove 354 until the groove control edge 358 reaches the seal 340. Fluid entering chamber 343 is displaced through apertures 360, the groove 363 in the end of cylinder tube 280, through passage 320 and valve 299 to conduit 318. Accordingly, the placement of the seal member 340 in the bore 283 determines the effective displacement of the piston 330.

The position of the seal member 340 may be easily changed by removing the cylinder tube 280 from the head member 282 or by removing the head member 284 from the lower end of the cylinder tube 280 and withdrawing the spacers 342 through 350, as needed, to reposition the seal member 340 between a selected pair of spacers. The spacer 342 remains in the position illustrated in Figure 10, relative to the other spacers and may, in fact, be formed as part of the cylinder tube 280. By providing a piston such as the piston 330 which has a relatively long stroke length in relation to the diameter of the chambers 341 and 343, injection ratios in the range of 1.0 part additive to 3,000 parts primary fluid to 1.0 part additive to 15,000 parts primary fluid may be easily obtained with a piston having a diameter of about 3.0 millimeters and a stroke length of about 17.0 millimeters.

Referring to Figures 8 and 12, the motor 212 includes a unique valve arrangement for bypassing the primary fluid directly from the inlet conduit 218 to the annular chamber 244 so that it may flow through the conduit 220 without operating the piston assembly 224. The housing section 217 includes a tapered stepped bore 370 opening from the inlet conduit 218 into the chamber 244 and adapted to receive a valve closure piston 372 having a seal ring 374 disposed thereon. The closure piston 372 is connected to an operating stem 376 which extends through a removable retainer nut 378 and is connected to an operating handle 380. The actuating stem 376 includes a transversally extending retaining pin 381 whereby the stem 376 may be rotated to place the pin 381 in a slot 383 extending longitudinally in the nut 378 to permit movement of the valve closure piston 372 from the closed and locked position shown to an open position indicated by the dashed lines in Figure 8. The bypass valve is normally maintained locked in the valve closed position, as illustrated, by rotating the stem 376 to place the retaining pin 381 adjacent a surface 384 formed by a counterbore 385 in the retaining nut 378. Accordingly, when it is desired to bypass primary fluid directly from the conduit 218 to the conduit 220 by way of the annular chamber 244 the operating handle 380 may be rotated to align the pin 381 with the slot 383 and moved to the alternate position illustrated in Figure 1. This operation of bypassing primary fluid through the annular chamber 244 may include the chamber 242 depending on the position of the valve assembly 230. Accordingly, regardless of the position of the piston assembly 224 and the valve assembly 230, primary fluid may be conducted directly from the conduit 218 to the conduit 220 and typically rendering the piston assembly 224 inoperative while primary fluid is being bypassed directly to the discharge conduit line 221.

The operation of the apparatus 210 is believed to be readily understandable from the foregoing description of the operation of the apparatus 12 and the description of the motor 212 and the pump 271.

The entire apparatus 12 as well as the apparatus 210 may be made of conventional engineering materials utilized for pumps for pumping various types of corrosive as well as non-corrosive liquids.

**Claims**

1. Apparatus (12, 210) for injecting a predetermined quantity of fluid additive into a primary fluid stream comprising: a housing (14, 24) defining first and second cylinder bores, (26, 38, 222, 228), a differential piston assembly (30, 224) reciprocably disposed in said bores and forming first (68, 28, 240, 245), second (40, 244) and third (42, 244) fluid chambers in said housing; an inlet passage (21, 218) in said housing for conducting primary fluid under pressure to said first chamber to act on said piston assembly, a discharge passage (22, 220) in said housing for conducting primary fluid from said second and third chambers from said apparatus; an additive fluid cylinder (48, 280) and an additive fluid piston (150, 330) reciprocably disposed in said additive fluid cylinder for displacing a quantity of additive fluid from said additive fluid cylinder for injection into said primary fluid; piston rod means (54, 262) interconnecting said piston assembly with said additive fluid piston for reciprocation with said piston assembly; first and second valve means (72, 88, 232, 236) associated with said piston assembly and movable to respective positions to place said first and second chambers in communication with each other and close off communication between said second and third chambers and alternately close off said first chamber from said second chamber while communicating said second chamber with said third chamber; a shaft (100, 248) disposed on said piston assembly for moving said valves between said positions and including means (104, 111) engageable with said housing to initiate movement of said shaft in opposite directions, and toggle means (82, 126, 246) for yieldable biasing in a snap-over-center relation said valve means in said positions, respectively; characterized in that said piston assembly (30, 224) said additive fluid piston (150, 330), said shaft (100, 248) and said means (104, 111) engageable with said housing, are arranged generally coaxial with a central axis (17, 263) of said piston rod (54, 262) for causing forces acting on said piston assembly (30, 224) to initiate movement of said valve means (72, 88, 232, 236) and to reciprocate said additive fluid piston (150, 330) to be directed substantially along said axis and said toggle means includes first and second toggle means (126, 246, 82); said second toggle means (82) being associated with said first valve means (72, 232) and said piston assembly (30, 224) in snap-over-center relation, to bias said first valve means (72, 232) toward said one position and simultaneously bias said second valve means (88, 236) toward said other position in response to movement of the shaft (100, 248) disposed on said piston assembly; said first toggle means (126, 246) being associated with said shaft (100, 248) and said piston assembly (30, 224) in snap-over-center relation to impact said shaft (100, 248) causing movement of said shaft in contact with said first valve means (72, 232) to move said first (72, 232) and second (88, 236) valve means to one or the other of said positions, aided by the second toggle means (82).

2. The apparatus set forth in claim 1 wherein said second valve means comprises a first closure member (72, 232) slidably mounted on said shaft (100, 248) and movable between open and closed positions relative to said piston assembly (30, 224) to provide for conducting primary fluid from said first chamber (68, 240) to said second chamber (40, 242).

3. The apparatus set forth in claims 1 or 2 wherein said second toggle means (82) comprises leaf spring means interconnected between said first closure member (72, 232) and said piston assembly (30, 224) and operable to bias said first closure member in open and closed position respectively.

4. The apparatus set forth in any one of claims 1 to 3 wherein said first toggle means includes link means (114, 116, 252, 254) interconnecting said shaft (100, 248) with said piston assembly (30, 224) and spring means (126, 56) associated with said link means for biasing said shaft in a selected one of opposite directions in response to said link means moving through an unstable position between opposed stable position of said link means corresponding to said position of said valve means, respectively.

5. the apparatus set forth in any one of claims 1 to 4 wherein said first toggle means includes means (108, 112, 249, 258) forming a lost motion coupling between said shaft (100, 248) and said link means (114, 116, 252, 254) for imparting an impact force to said shaft when said link means moves toward a stable position to move said first closure member (72, 232) toward one of open and close positions, respectively.

6. The apparatus set forth in any one of claims 1 to 5 wherein said shaft includes a bifurcated extension part forming opposed coextensive arms (109) disposed on opposite sides of said piston rod means (54, 262) and having distal ends (111) engageable with means (50, 264) on said housing (14, 214) to limit the movement of said shaft (100, 248) in one direction of movement of said piston assembly (30, 224).

7. The apparatus set forth in any one of claims 1 to 6 wherein said additive fluid cylinder (280) includes opposed head means (282, 284), a means forming fluid inlet (288), fluid discharge (310) and fluid bypass (320) passages, respectively, in communication with said additive fluid cylinder; respective one way valves (285, 298, 299) interposed in said passages for admitting additive fluid to said additive fluid cylinder through said inlet passage and discharging additive fluid through said discharge and bypass passages, respectively; seal means (340) interposed in said additive fluid cylinder and cooperable with said additive fluid piston (330) to form opposed fluid discharge and bypass chambers (341, 343) in said additive fluid cylinder, and said additive fluid piston includes passage means (354) formed therein and cooperative with said seal means in such a way as to bypass additive fluid from said discharge chamber to said bypass chamber during a fluid displacement stroke of said additive fluid piston to control the amount of fluid discharged to said discharge conduit.

8. The apparatus set forth in claim 7 wherein said passage means comprises a groove extending axially along the peripheray of said additive fluid piston.

9. The apparatus set forth in claims 7 or 8 wherein said passage means comprises a spiral groove (354) on the periphery of said additive fluid piston.

10. The apparatus set forth in any one of claims 7 to 9 including a plurality of annular spacers (342, 344, 346, 348, 350) insertable in said additive fluid cylinder (280) in predetermined relationship to each other and to said seal means (340) for selectively positioning said seal means.

11. The apparatus set forth in any one of claims 1 to 6 wherein said additive fluid piston (150) divides said additive fluid cylinder (48) into first and second additive fluid chambers (140, 156), said additive fluid piston is slidably mounted on said piston rod means (57) and includes passage means (152) interconnecting said additive fluid chambers in at least one position of said additive fluid piston, and said piston rod means includes spaced apart stop means (160, 146) formed thereon for reciprocating said additive fluid piston through an additive fluid intake and delivery stroke to effect displacement of a predetermined charge of additive fluid into said primary fluid during a reciprocating stroke cycle of said piston assembly.

12. The apparatus set forth in claim 11 wherein one of said stop means (146) on said piston rod means (54) includes means for engagement with said additive fluid piston (150) to close said passage means (152) in said additive fluid piston from interconnecting said additive fluid chambers.

13. The apparatus set forth in claim 11 or 12 including spacer means (162, 164, 166) removably mountable on said piston rod means (54) between said additive fluid piston (150) and one of said stop means (160) for selectively varying the displacement of said additive fluid piston to vary the charge of additive fluid injected into said primary fluid during a delivery stroke of said additive fluid piston.

14. The apparatus set forth in any one of claims 1 to 13 wherein said discharge passage (167, 310) is arranged for injecting additive fluid into said primary fluid downstream of said third chamber (42, 244) in the direction of flow of primary fluid through said apparatus.

15. The apparatus set forth in any one of claims 1 to 14 wherein a manually actuated bypass valve means (170, 372) is disposed in communications with said chambers (28, 42, 22, 218, 245, 244) for selectively placing said first chamber (28, 218, 245) in direct communication with said third chamber (42, 22, 244) for bypassing primary fluid through said housing (14, 214).

16. The apparatus set forth in claim 15 wherein said bypass valve means includes a closure member (170, 372) and actuating stem (376) connected to said closure member, operating handle means (380) connected to said stem for moving said closure member between open and closed positions at will, and means (381) associated with said stem for locking said closure member in said closed position.

17. The apparatus set forth in claim 7 wherein at least one of said head means (282, 284) being releasably for removal of said one head means to gain access to said spacers for removal and reinsertion of said spacers and said seal means in said bore in predetermined stacked relationship.

18. The apparatus set forth in claim 17 wherein one of said head means (284) includes a first boss for threadedly coupling said one head means to said cylinder means (280), a second boss (293) on said one head means for connecting a discharge conduit (310) to said one head means, and said one head means includes said respective one way additive fluid inlet and discharge valves (285, 298) interposed in passage means (288, 296) in communication with said bore (243).

19. The apparatus set forth in claims 17 or 18 wherein another of said head means (282) includes a first boss for threadedly coupling said other head means to said cylinder means (280) and a second boss (316) for connecting a bypass conduit (318), and said other head means includes a one way additive fluid bypass valve (299) being in communication with said bypass chamber (343).

## Patentansprüche

1. Vorrichtung (12, 210) zum Einspritzen einer vorbestimmten Menge eines Strömungsmittel-Additivs in einen Strom eines hauptströmungsmittels mit einem Gehäuse (14, 24), das erste und zweite zylindrische Bohrungen (26, 38, 22, 228) definiert, eine Differentialkolbeneinheit (30, 224), die in den Bohrungen hin- und herbewegbar ist, und die erste (68, 28, 240, 245), zweite (40, 244) und dritte (42, 244) Strömungsmittelkammern im Gehäuse bildet; einer Einlaßöffnung (21, 218) im Gehäuse zum Leiten des Hauptströmungsmittels unter Druck zur ersten Kammer, um auf die Kolbeneinheit zu wirken, einer Ausgabeöffnung (22, 220) im Gehäuse zum Leiten des Hauptströmungsmittels von den zweiten und dritten Kammern aus der Vorrichtung; einen Additiv-Zylinder (48, 280) und einen Additiv-Kolben (150, 330), der zum Verschieben einer Menge des Additivs aus dem Additiv-Zylinder zum Einspritzen in das Hauptströmungsmittel im Additiv-Zylinder hin- und herbeweglich ist; einer Kolbenstangeneinrichtung (54, 262), die die Kolbeneinheit mit dem Additiv-Kolben zum Bewegen mit der Kolbeneinheit verbindet; ersten und zweiten Ventileinrichtungen (72, 88, 232, 236), die mit der Kolbeneinheit verbunden sind und in entsprechende Positionen bewegbar sind, um die ersten und zweiten Kammern in Verbindung miteinander zu bringen und die Verbindung zwischen der zweiten und dritten Kammer zu schließen, und alternativ dazu die Verbindung der ersten Kammer zur zweiten Kammer zu schließen, während die zweite Kammer mit der dritten Kammer verbunden ist; einen Schaft (100, 248), der an der Kolbeneinheit zum Bewegen der Ventile zwischen den Positionen befestigt ist und eine Einrichtung (104, 101) enthält, die mit dem Gehäuse in Eingriff bringbar ist, um die Bewegung des Schaftes in entgegengesetzte Richtungen einzuleiten, und mit einer Kippgelenkeinrichtungen (82, 126, 246) zum nachgiebigen Beaufschlagen der Ventileinrichtungen in den entsprechenden Positionen durch ein Umschnappen über einen Totpunkt; dadurch gekennzeichnet, daß die Kolbeneinheit (30, 224), der Additiv-Kolben (150, 330), der Schaft (100, 248) und die mit dem Gehäuse in Eingriff bringbare Einrichtung (104, 100) im wesentlichen koaxial mit einer zentralen Achse (17, 263) der Kolbenstange (54, 262) angeordnet sind, um zu bewirken, daß Kräfte, die auf die Kolbeneinheit (30, 224) zum Einleiten der Bewegung der Ventileinrichtungen (72, 88, 232, 236) und zum Hin- und Herbewegen des Additiv-Kolbens (150, 330) wirken, im wesentlichen entlang der Achse gerichtet sind, und daß die Kippgelenkeinrichtung erste und zweite Kippgelenkeinrichtungen (126, 246, 82) enthält, wobei die zweite Kippgelenkeinrichtung (82) mit der ersten Ventileinrichtung (72, 232) und der Kolbeneinheit (30, 234) zum Überschnappen über einen Totpunkt zusammenwirkt, um die erste Ventileinrichtung (72, 332) gegen eine Position zu belasten und gleichzeitig die zweite Ventileinrichtung (88, 236) gegen die andere Position in Abhängigkeit der Bewegung des an der Kolbeneinheit angeordneten Schaftes (100, 248) zu belasten, wobei die erste Kippgelenkeinrichtung (126, 246) mit dem Schaft (100, 248) und der Kolbeneinheit (30, 224) zum Überschnappen über einen Totpunkt verbunden ist, um den Schaft (100, 248) zu beaufschlagen, was eine Bewegung des Schaftes in Kontakt mit der ersten Ventileinrichtung (72, 232) bewirkt, um die erste (72, 232) und zweite (88, 236) Ventileinrichtung in eine oder die andere der Positionen zu bewegen, unterstützt durch die zweite Kippgelenkeinrichtung (82).

2. Vorrichtung nach Anspruch 1, wobei die zweite Ventileinrichtung ein erstes Schließglied (72, 232) enthält, das gleitend am Schaft (100, 248) angeordnet und zwischen einer offenen und geschlossenen Position relativ zur Kolbeneinheit (30, 234) bewegbar ist, um das überleiten des Hauptströmungsmittels aus der ersten Kammer (68, 240) in die zweite Kammer (40, 242) zu bewirken.

3. Vorrichtung nach den Ansprüchen 1 oder 2, wobei die zweite Kippgelenkeinrichtung (82) eine zwischen dem ersten Schließglied (72, 232) und der Kolbeneinheit (30, 224) eingefügte Blattfeder enthält, die fähig ist, das erste Schließglied in den entsprechenden offenen und geschlossenen Positionen zu beaufschlagen.

4. Vorrichtung nach einem der Ansprüche 1 bis 3, wobei die erste Kippgelenkeinrichtung ein den Schaft (100, 248) und die Kolbeneinheit (30, 224) miteinander verbindendes Gestänge (114, 116, 252, 254) und eine Federeinrichtung (126, 56) enthält, die mit dem Gestänge zum Beaufschlagen des Schaftes in einer aus den gegensätzlichen Richtungen ausgewählten Richtung in Abhängigkeit mit dem Gestänge beaufschlagt, das durch eine unstabile Position zwischen gegenüberliegenden stabilen Positionen des Gestänges sich bewegt, die den Positionen der entsprechenden Ventileinrichtungen entsprechen.

5. Vorrichtung nach einem der Ansprüche 1 bis 4, wobei die erste Kippgelenkeinrichtung eine Einrichtung (108, 112, 249, 248) enthält, die eine Totgangkupplung zwischen dem Schaft (100, 248) und dem Gestänge (114, 116, 252, 254) bildet, um den Schaft mit einer Stoßkraft zu beaufschlagen, wenn sich das Gestänge in Richtung auf eine stabile Position bewegt, um das erste Schließglied (72, 232) gegen entweder die offene oder geschlossene Position zu bewegen.

6. Vorrichtung nach einem der Ansprüche 1 bis 5, wobei der Schaft einen gabelförmigen, abstehenden Teil enthält, der einander gegenüberliegende, sich in gleicher Richtung erstreckende Arme (109) bildet, die an gegenüberliegenden Seiten der Kolbenstangeneinrichtung (54, 262) angeordnet sind und freie Enden (111) aufweisen, die mit einer Einrichtung (50, 264) am Gehäuse (14, 214) in Eingriff bringbar sind, um die Bewegung des Schaftes (100, 248) in einer Richtung der Bewegung der Kolbeneinheit (30, 224) zu begrenzen.

7. Vorrichtung nach einem der Ansprüche 1 bis 6, wobei der Additiv-Zylinder (280) einander gegenüberliegende Kopfeinrichtungen (282, 284), eine Einrichtung zum Ausbilden eines Strömungsmittel-Einlasses (288), einen Strömungsmittel-Auslaß (310) und entsprechende Umgehungsöffnungen (320) für das Strömungsmittel enthält, die in Verbindung mit dem Additiv-Zylinder stehen; entsprechende Ein-Wege-Ventile (285, 298, 299) in den Öffnungen angeordnet sind, um dem Additiv Zutritt zum Additiv-Zylinder durch die Einlaßöffnung zu gewähren und das Additiv durch die Ausgabe- und die entsprechenden Umgehungsöffnungen auszugeben, daß eine Dichteinrichtung (340) im Additiv-Zylinder angeordnet ist und mit dem Additiv-Kolben (330) zusammenwirkt, um gegenüberliegende Ausgabe- und Umgehungskammern (341, 343) für das Strömungsmittel im Additiv-Zylinder zu bilden, und daß der Additiv-Kolben einen eingeformten Durchgang (354) enthält, der mit der Dichteinrichtung derart zusammenwirkt, daß Additiv während eines Strömungsmittel-Verdrängungshubes des Additiv-Kolbens aus der Ausgabekammer in die Umgehungskammer umgeleitet wird, um die Menge des in die Ausgabeleitung ausgegebenen Strömungsmittels zu kontrollieren.

8. Vorrichtung nach Anspruch 7, wobei der Durchgang eine sich im wesentlichen axial entlang des Umfanges des Additiv-Kolbens erstreckende Nut enthält.

9. Vorrichtung nach den Ansprüchen 7 oder 8, wobei der Durchgang eine Spiralnut (354) am Umfang des Additiv-Kolbens enthält.

10. Vorrichtung nach einem der Ansprüche 7 bis 9, die eine Mehrzahl von ringförmigen Abstandshaltern (342, 344, 346, 348, 350) enthält, die in den Additiv-Zylinder (280) in vorbestimmter Anordnung zueinander und zur Dichteinrichtung (340) einsetzbar ist, um die Dichteinrichtung in ausgewählter Weise positionieren zu können.

11. Vorrichtung nach einem der Ansprüche 1 bis 6, wobei der Additiv-Kolben (150) den Additiv-Zylinder (48) in eine erste und eine zweite Additiv-Kammer (140, 156) unterteilt, wobei der Additiv-Kolben gleitend an der Kolbenstangeneinrichtung (57) angeordnet ist und einen Durchgang (152) enthält, der die Additiv-Kammern in mindestens einer Position des Additiv-Kolbens verbindet, und wobei die Kolbenstangeneinrichtung daran angeordnete, zueinander beabstandete Anschläge (160, 146) enthält, um den Additiv-Kolben durch einen Additiv-Ansaug- und -ausgabehub zu bewegen, um die Verlagerung einer vorbestimmten Additivmenge in das Hauptströmungsmittel während eines hin- und hergehenden Hubzyklus der Kolbeneinheit zu bewirken.

12. Vorrichtung nach Anspruch 11, wobei einer der Anschläge (146) an der Kolbenstangeneinrichtung (54) eine Einrichtung zum Eingriff mit dem Additiv-Kolben (150) enthält, um den Durchgang (152) im Additiv-Kolben gegen eine Verbindung der Additiv-Kammern zu schließen.

13. Vorrichtung nach Anspruch 11 oder 12, wobei Abstandshalter (162, 164, 166) vorgesehen sind, die lösbar an der Kolbenstangeneinrichtung (54) zwischen dem Additiv-Kolben (150) und einem der Anschläge (160) angeordnet sind, um in ausgewählter Weise die Verschiebung des Additiv-Kolbens zu variieren, um die in das Hauptströmungsmittel während eines Förderhubs des Additiv-Kolbens eingespritzte Additivmenge zu variieren.

14. Vorrichtung nach einem der Ansprüche 1 bis 13, wobei die Auslaßöffnung (167, 310) zum Einspritzen des Additivs in das Hauptströmungsmittel stromabwärts der dritten Kammer (42, 244) in der Durchflußrichtung des Hauptströmungsmittels durch die Vorrichtung angeordnet ist.

15. Vorrichtung nach einem der Ansprüche 1 bis 14, wobei ein handbetätigbares Umgehungsventil (170, 372) in Verbindung mit den Kammern (28, 42, 22, 218, 245, 244) angeordnet ist, um in ausgewählter Weise die erste Kammer (28, 218, 245) in direkte Verbindung mit der dritten Kammer (42, 22, 224) zu bringen, um das Hauptströmungsmittel durch das Gehäuse (14, 214) umzuleiten.

16. Vorrichtung nach Anspruch 15, wobei das Umgehungsventil ein Schließglied (170, 372) und einen mit dem Schließglied verbundenen Betätigungsstößel (376), einen mit dem Stößel verbundenen Handgriff (380) zum willkürlichen Bewegen des Schließgliedes zwischen einer offenen und einer geschlossenen Position und eine Einrichtung (381) enthält, die mit dem Stößel in Verbindung steht, um das Schließglied in der geschlossenen Position zu sichern.

17. Vorrichtung nach Anspruch 7, wobei mindestens eine der Kopfeinrichtungen (282, 284) lösbar ist, um eine Kopfeinrichtung zum Zugriff zu den Abstandshaltern entfernen zu können, um die Abstandshalter und die Dichteinrichtung in der Bohrung entfernen und in einer vorbestimmt gestapelten Weise wieder einsetzen zu können.

18. Vorrichtung nach Anspruch 17, wobei eine der Kopfeinrichtungen (284) eine erste Verdickung zum Anschrauben einer der Kopfeinrichtungen an den Zylindereinrichtungen (280) und eine zweite Verdickung (293) an der Kopfeinrichtung aufweist, um eine Auslaßleitung (310) an diese Kopfeinrichtung anzuschließen, wobei diese Kopfeinrichtung die entsprechenden Ein-Weg-Ventile (285, 298) für den Additiveinlaß und den -auslaß aufweist, die in einem mit der Bohrung (243) in Verbindung stehenden Durchgang (288, 296) angeordnet sind.

19. Vorrichtung nach den Ansprüchen 17 oder 18, wobei einer weitere der Kopfeinrichtungen (282) einer erste Verdickung zum Abschrauben dieser anderen Kopfeinrichtung an der Zylindereinrichtung (280) und eine zweite Verdickung (316) aufweist, um eine Umgehungsleitung (318) zu verbinden, und wobei die andere Kopfeinrichtung ein Ein-Wege-Umgehungsventil (299) für das Additiv aufweist, das in Verbindung mit der Umgehungskammer (343) steht.

## Revendications

1. Appareil (12, 210) pour l'injection d'une quantité prédéterminée d'additif fluide dans un courant de fluide primaire, comprenant: un corps (14, 24) définissant des premier et second alésages-cylindres (26, 38, 222, 228), un assemblage de piston différentiel (30, 224) mobile alternativement dans lesdits alésages et formant, dans ledit corps, des première (68, 28, 240, 245), deuxième (40, 244) et troisième (42, 244) chambres de fluide; un passage d'admisstion (21, 218), ménagé dans ledit corps pour amener du fluide primaire sous pression à ladite première chambre, afin qu'il agisse sur ledit assemblage de piston; un passage d'évacuation (22, 220), ménagé dans ledit corps pour évacuer du fluide primaire desdites deuxième et troisième chambres dudit appareil; un cylindre (48, 280) à fluide additif et un piston (150, 330) à fluide additif, mobile alternativement dans ledit cylinder à fluide additif pour déplacer, à partir de ce cylindre à fluide additif, une certaine quantité de fluide additif à injecter dans ledit fluide primaire; une tige (54, 262) de piston reliant ledit assemblage de piston audit piston à fluide additif, pour que celui-ci se meuve alternativement avec ledit assemblage de piston; des premier et second moyens d'obturation (72, 88, 232, 236), associés audit assemblage de piston et pouvant prendre des positions respectives, soit pour mettre lesdites première et deuxième chambres en communication l'une avec l'autre et interrompre la communication entre lesdites deuxième et troisième chambres, soit pour couper ladite première chambre de ladite deuxième chambre, tout en mettant ladite deuxième chambre en communication avec ladite troisième chambre; une tige (100, 248) disposée sur ledit assemblage de piston pour déplacer lesdits obturateurs entre lesdites positions, et présentant des moyens (104, 111) pouvant porter contre ledit corps pour amorcer le déplacement de ladite tige en des sens opposés, ainsi que des moyens à genouillère (82, 126, 246) pour solliciter élastiquement lesdits moyens d'obturation vers lesdites positions respectives, en relation d'encliquetage excentré; caractérisé par le fait que ledit assemblage de piston (30, 224), ledit piston (150, 330) à fluide additif, ladite tige (100, 248) et lesdits moyens (104, 111) pouvant porter contre ledit corps sont agencés, pour l'essentiel, coaxialement à un axe médian (17, 263) de ladite tige (54, 262) de piston, de telle sorte que des forces agissant sur ledit assemblage de piston (30, 224) amorcent un mouvement desdits moyens obturateurs (72, 88, 232, 236) et impriment un mouvement alternatif audit piston (150, 330) à fluide additif, dirigé pour l'essentiel selon ledit axe, et lesdits moyens à genouillère comprennent des premier et second moyens à genouillère (126, 246, 82); ledit second moyen à genouillère (82) étant associé audit premier moyen obturateur (72, 232) et audit assemblage de piston (30, 224), en relation d'encliquetage excentré, afin de solliciter ledit premier moyen obturateur (72, 232) vers l'une précitée desdites positions, et de solliciter simultanément ledit second moyen obturateur (88, 236) vers ladite autre position en réponse au mouvement de la tige (100, 248) disposée sur ledit assemblage de piston; ledit premier moyen à genouillère (126, 246) étant associé à ladite tige (100, 248) et audit assemblage de piston (30, 224), en relation d'encliquetage excentré, de manière à exercer, sur ladite tige (100, 248), un impact provoquant un mouvement de ladite tige au contact dudit premier moyen obturateur (72, 232) pour déplacer lesdits premier (72, 232) et second (88, 236) moyens obturateurs vers l'une ou l'autre desdites positions, avec le concours du second moyen à genouillère (82).

2. Appareil selon la revendication 1, dans lequel: ledit second moyen obturateur est constitué par un premier organe de fermeture (72, 232), monté coulissant sur ladite tige (100, 248) et mobile entre des positions d'ouverture et de fermeture par rapport audit assemblage de piston (30, 224), pour permettre la canalisation de fluide primaire de ladite première chambre (68, 240) à ladite deuxième chambre (40, 242).

3. Appareil selon la revendication 1 ou 2, dans lequel ledit second moyen à genouillère (82) comprend en un moyen du type ressort à lame, interposé entre ledit premier organe de fermeture (72, 232) et ledit assemblage de piston (30, 224), et agissant pour solliciter ledit premier organe de fermeture vers des positions d'ouverture et de fermeture, respectivement.

4. Appareil selon l'une quencolque des revendications 1 à 3, dans lequel ledit premier moyen à genouillère comporte des tringles (114, 116, 252, 254) reliant ladite tige (100, 248) audit assemblage de piston (30, 224), et des ressorts (126, 56) associés auxdites tringles pour solliciter ladite tige sélectivement, dans l'un de deux sens opposés, en réponse au franchissement, par lesdites tringles, d'une position instable intermédiaire entre des positions stables opposés desdites tringles, correspondant respectivement auxdites positions desdits moyens obturateurs.

5. Appareil selon l'une quelconque des revendications 1 à 4, dans lequel: ledit premier moyen à genouillère comporte des moyens (108, 112, 249, 258) assurant un accouplement à mouvement perdu entre ladite tige (100, 248) et lesdites tringles (114, 116, 252, 254), pour imprimer une force d'impact à ladite tige lorsque lesdites tringles se déplacent vers une position stable, afin de déplacer ledit premier organe de fermeture (72, 232) vers l'une desdites positions d'ouverture et de fermeture, respectivement.

6. Appareil selon l'une quelconque des revendications 1 à 5, dans lequel: ladite tige présente une partie de prolongement fourchue formant des bras opposés (109) de même étendue, disposés sur des côtés opposés de ladite tige (54, 262) de piston et munis d'extrémités distales (111) pouvant venir en prise avec des moyens (50, 264), sur ledit corps (14, 214), en vue de limiter le mouvement de ladite tige (100, 248) dans l'une des directions de mouvement dudit assemblage de piston (30, 224).

7. Appareil selon l'une quelconque des revendications 1 à 6, dans lequel: ledit cylindre (280) à fluide additif comporte des têtes opposées (282, 284), un moyen constituant une entrée de fluide (288), des passages d'évacuations (310) et de dérivation (320) de fluide, respectivement, en communication avec ledit cylindre à fluide additif; des vannes respectives à une voie (285, 298, 299), interposées dans lesdits passages pour admettre du fluide additif dans ledit cylindre à fluide additif à travers ledit passage d'admission, et évacuer du fluide additif à travers lesdits passages d'évacuation et de dérivation, respectivement; des moyens d'étanchéite (340) interposés dans ledit cylindre à fluide additif, et pouvant coopérer avec ledit piston (330) à fluide additif pour définir, dans ledit cylindre à fluide additif, des chambres opposées (341, 343) d'évacuation et de dérivation de fluide; et ledit piston à fluide additif comporte des moyens de passage (354) qui y sont ménagés, et peuvent coopérer avec lesdits moyens d'étanchéité de façon à envoyer en dérivation du fluide additif, de ladite chambre d'évacuation à ladite chambre de dérivation, pendant une course de déplacement de fluide dudit piston à fluide additif, pour régler la quantité de fluide évacuée vers ledit conduit d'évacuation.

8. Appareil selon la revendication 7, dans lequel: lesdits moyens de passage comprennent une rainure s'étendant axialement sur le pourtour dudit piston à fluide additif.

9. Appareil selon la revendication 7 ou 8, dans lequel: lesdits moyens de passage comprennent par une rainure hélicoïdale (354) située sur le pourtour dudit piston à fluide additif.

10. Appareil selon l'une quelconque des revendications 7 à 9, comportant: une série de cales d'épaisseur annulaires (342, 344, 346, 348, 350) pouvant être insérées dans ledit cylindre (280) à fluide additif, en relation prédéterminée les unes avec les autres et avec lesdits moyens d'étanchéité (340), pour positionner sélectivement lesdits moyens d'étanchéité.

11. Appareil selon l'une quelconque des revendications 1 à 6, dans lequel: ledit piston (150) à fluide additif divise ledit cylindre (48) à fluide additif en des première et second chambres (140, 156) à fluide additif, ledit piston à fluide additif est monté coulissant sur ladite tige (57) de piston, et présente des moyens de passage (152) reliant entre elles lesdites chambres à fluide additif dans une position au moins dudit piston à fluide additif, et ladite tige de piston comporte des moyens de butée espacés (160, 146) qui y sont ménagés pour imprimer, audit piston à fluide additif, un mouvement alternatif en une course d'admission et de refoulement de fluide additif, afin d'introduire une charge prédéterminée de fluide additif, dans ledit fluide primaire, au cours d'un cycle de course alternative dudit assemblage de piston.

12. Appareil selon la revendication 11, dans lequel: l'un (146) desdits moyens de butée prévus sur ladite tige (54) de piston comporte des moyens destinés à porter contre ledit piston (150) à fluide additif, pour fermer lesdits moyens de passage (152), dans ledit piston à fluide additif, afin qu'ils cessent de relier l'une à l'autre lesdites chambres à fluide additif.

13. Appareil selon la revendication 11 ou 12, comportant: des cales d'épaisseur (162, 164, 166) pouvant être montées de manière amovible sur ladite tige (54) de piston, entre ledit piston (150) à fluide additif et l'un (160) desdits moyens de butée, pour faire varier sélectivement le déplacement dudit piston à fluide additif afin de faire varier la charge de fluide additif injectée dans ledit fluide primaire, pendant une course de refoulement dudit piston à fluide additif.

14. Appareil selon l'une quelconque des revendications 1 à 13, dans lequel: ledit passage d'évacuation (167, 310) est agencé pour injecter du fluide additif, dans ledit fluide primaire, en aval de ladite troisième chambre (42, 244) dans le sens d'écoulement de fluide primaire à travers ledit appareil.

15. Appareil selon l'une quelconque des revendications 1 à 14, dans lequel: une valve de dérivation (170, 372) à actionnement manuel se trouve en communication avec lesdites chambres (28, 42, 22, 218, 245, 244) pour établir sélectivement la communication directe de ladite première chambre (28, 218, 245) avec ladite troisième chambre (42, 22, 244), afin d'envoyer du fluide primaire en dérivation à travers ledit corps (14, 214).

16. Appareil selon la revendication 15, dans lequel: ladite valve de dérivation comprend un organe obturateur (170, 372) et une tige d'actionnement (376) reliée audit organe obturateur, une poignée de manoeuvre (380) reliée à ladite tige pour imprimer à volonté, audit organe obturateur, un mouvement entre des positions d'ouverture et de fermeture, et un moyen (381) associé à ladite tige pour verrouiller ledit organe obturateur dans ladite position de fermeture.

17. Appareil selon la revendication 7, dans lequel: au moins l'une desdites têtes (282, 284) est démontable, en vue de la dépose de cette tête pour permettre l'accès auxdites cales d'épaisseur en vue d'un enlèvement et d'une réinsertion desdites cales d'épaisseur et desdits moyens d'étanchéite, dans ledit alésage, dans une relation d'empilement prédéterminée.

18. Appareil selon la revendication 17, dans lequel: l'une (284) desdites têtes comprend une première protubérance en vue de l'accouplement vissé de ladite tête avec ledit cylindre (280), une seconde protubérance (293) ménagée sur ladite tête, pour relier un conduit d'évacuation (310) à cette tête, et ladite tête présente lesdites vannes respectives à une voie (285, 298) d'admission et d'évacuation de fluide additif, interposées dans des moyens de passage (288, 296) en communication avec ledit alésage (243).

19. Appareil selon la revendication 17 ou 18, dans lequel: une autre (282) desdites têtes comprend une première protubérance en vue de l'accouplement vissé de ladite tête avec ledit cylindre (280), et une seconde protubérance (316) pour le raccordement d'un conduit de dérivation (318), et ladite autre tête présente une vanne à une voie (299) de dérivation de fluide additif, en communication avec ladite chambre de dérivation (343).

EP 0 161 614 B1

FIG. 2

FIG. 1

FIG. 3

1

FIG. 4

FIG. 5

FIG. 6

FIG. 7

FIG. 8

FIG. 12

FIG. 9

FIG. 11

FIG. 10

4